# FASCICULE DE BREVET EUROPEEN

(11) **EP 3 707 412 B1**
(45) Date de publication et mention de la délivrance du brevet: **01.12.2021**
(21) Numéro de dépôt: 18799769.7
(22) Date de dépôt: 08.11.2018
(51) Int. Cl.: F16H 55/36, F16H 55/48

(54) **POULIE POUR ALTERNO-DEMARREUR**
RIEMENSCHEIBE FÜR EINEN STARTER-GENERATOR
PULLEY FOR A STARTER-ALTERNATOR

(30) Priorité: 08.11.2017 FR 1760493
(43) Date de publication de la demande: 16.09.2020
(73) Titulaire: Hutchinson, 75008 Paris (FR)
(72) Inventeur: VARIN, Hervé, 37300 Joue-Les-Tours (FR)
(74) Mandataire: Gevers & Orès
(86) Numéro de dépôt international: PCT/EP2018/080560
(87) Numéro de publication internationale: WO 2019/092075

(56) Documents cités:
- WO-A1-98/50709
- WO-A1-2015/019301
- WO-A1-2016/149816

## Description

L'invention concerne le domaine de la transmission de puissance par courroie.

Plus précisément, l'invention concerne une poulie pour alterno-démarreur.

Ce type de poulie trouve notamment une application pour les véhicules automobiles hybrides (thermique/électrique). Pour cette application, la poulie doit remplir plusieurs fonctions :
- assurer le démarrage du moteur thermique, par l'intermédiaire de la courroie de transmission (passage de l'arrêt du moteur thermique à un régime démarré, proche du ralenti) ;
- assurer un apport de couple au moteur thermique pour pouvoir accélérer le véhicule, lorsque le moteur thermique est démarré (on appelle ce mode « Boost » selon la terminologie anglo-saxonne) ;
Dans les modes de fonctionnement décrits ci-dessus, la poulie est motrice/menante (fourniture de couple).
Toujours pour cette application, ce type de poulie doit également entrainer l'alternateur pour remplir les fonctions suivantes :
- assurer une récupération d'énergie lorsque le moteur thermique décélère (on appelle ce mode « Regen ») ;
- fournir du courant électrique au véhicule.
Dans les deux derniers modes de fonctionnement, la poulie se comporte comme un récepteur/alternateur (consommateur de couple).

En outre, il convient de noter qu'un moteur thermique présente, notamment à bas régimes, à savoir typiquement pour des régimes inférieurs à 1500 tr/mn, des irrégularités de fonctionnement nommées acyclismes. Ceci provoque des variations de tension importantes dans la courroie qu'il est assez délicat de traiter avec ce type de poulie.

Pour répondre à l'ensemble de ces contraintes, certaines solutions ont déjà été proposées.

On pourra par exemple se référer aux documents WO 2016/090487 et WO 2016/149816.

On pourra par exemple se référer aux documents WO 2016/090487 et WO 2016/149816. On pourra aussi se référer au document WO 2015/019301 relatif à une poulie selon le préambule de la revendication 1.

Un objectif de l'invention est de proposer une poulie pour alterno-démarreur améliorée.
A cet effet, l'invention propose une poulie selon la revendication 1.

La poulie selon l'invention pourra également présenter l'une au moins des caractéristiques suivantes, prise seule ou en combinaison :
- chaque couronne comprend une première partie comportant lesdits ergots et une deuxième partie s'étendant axialement, sous ladite zone destinée à recevoir une courroie reliant la jante à un premier élément de transmission de puissance, à partir de la première partie, chaque deuxième partie se présentant sous la forme d'au moins une jupe cylindrique située, radialement, soit entre l'élément élastiquement déformable et la jante pour les deux parties, soit entre l'élément élastiquement déformable et le moyeu pour les deux parties ;
- chaque deuxième partie comprend une deuxième jupe cylindrique, concentrique avec la première jupe, l'élément élastiquement déformable étant alors logé entre lesdites jupes cylindriques ;
- au moins l'une des jupes cylindriques comprend au moins une fente, avantageusement longitudinale ;
- la ou chaque couronne est réalisée en un matériau choisi parmi les plastiques tels que les polyamide (PA), polyester, polyoxyméthylène (POM), polyétheréthercétone (PEEK), polysulfure de phénylène (PPS) ou des alliages de ceux-ci ou les thermoplastiques élastomères (TPE) ;
- il est prévu, sur l'une des couronnes, au moins un premier ressort additionnel monté en parallèle avec l'élément élastiquement déformable ;
- il est prévu, sur ladite couronne, un deuxième ressort additionnel, également monté en parallèle avec l'élément élastiquement déformable, le premier et le deuxième ressorts additionnels présentant une même raideur et étant agencés, sur ladite couronne, de façon diamétralement opposée ;
- l'élément élastiquement déformable est un ressort de torsion ;
- il est prévu un support de charge, par exemple un roulement, disposé radialement entre l'un des indexeurs et la jante.

L'invention sera mieux comprise et d'autres buts, avantages et caractéristiques de celle-ci apparaîtront plus clairement à la lecture de la description qui suit et qui est faite au regard des figures annexées suivantes :
- Les figures 1 à 3 représentent un premier mode de réalisation d'une poulie conforme à l'invention, respectivement selon une vue en coupe et des vues éclatées ;
- La figure 4(a) est un schéma fonctionnel représentant l'évolution du couple fourni par la poulie selon le premier mode de réalisation en fonction du temps, avec en parallèle, l'évolution du régime d'un moteur sur lequel la poulie a été montée et la figure 4(b) un autre schéma fonctionnel de ce couple en fonction d'un angle donné dans la poulie ;
- Les figures 5 à 9 représentent les différentes configurations possibles de la poulie selon le premier mode de réalisation, en suivant les différentes évolutions au cours du temps représentées sur la figure 4;
- La figure 10, également relative au premier mode de réalisation, est une vue en coupe partielle permettant de visualiser le montage d'un élément élastiquement déformable dans des couronnes de la poulie ;
- Les figures 11 à 13 représentent un deuxième mode de réalisation d'une poulie conforme à l'invention ;
- La figure 14 est un schéma fonctionnel de l'évolution du couple fourni par la poulie selon le deuxième mode de réalisation en fonction d'un angle donné dans la poulie ;
- La figure 15, qui comprend les figures 15(a) et 15(b), représente une variante de réalisation au premier mode de réalisation, selon une vue en coupe longitudinale et une vue en perspective, respectivement ;
- La figure 16, qui comprend les figures 16(a) et 16(b), représente une autre variante de réalisation, selon une vue en perspective sur la figure 16(a) et cette même vue en perspective, coupée, sur la figure 16(b).

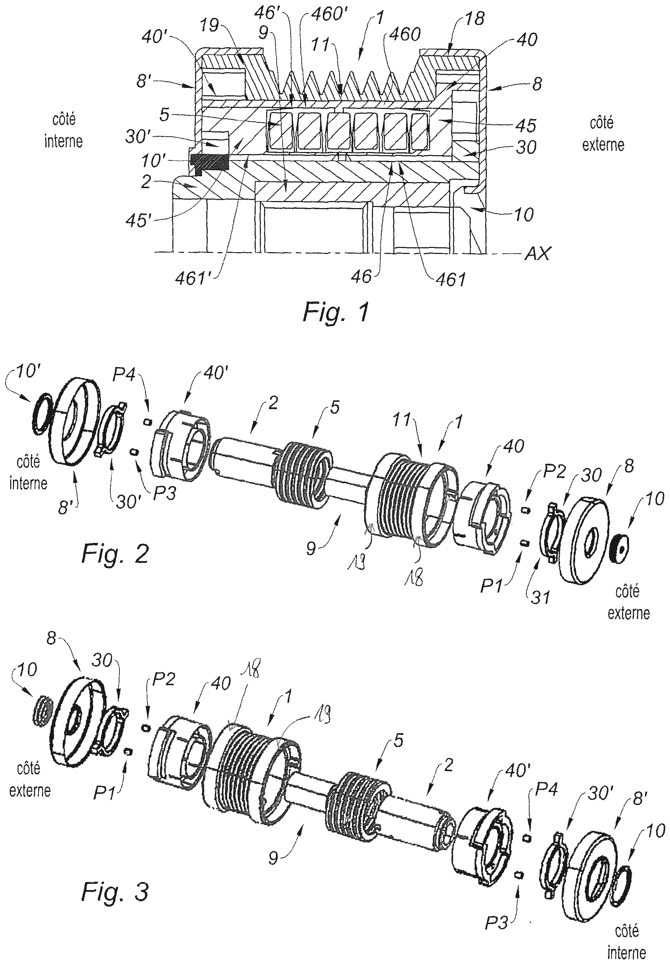

Un premier mode de réalisation de l'invention est décrit à l'appui des figures 1 à 10.

La poulie 100 selon l'invention comporte une jante 1 solidaire d'un premier élément de transmission de puissance (non représenté, par exemple une courroie reliée à un arbre d'un moteur de véhicule). La jante 1 est munie d'une première zone 11, radialement externe, destinée à recevoir une courroie, en l'occurrence une courroie de type poly V^{®} permettant de faire le lien avec le premier élément de transmission de puissance. La jante 1 est également munie d'une deuxième zone 18, situé dans le prolongement axial externe de la première zone 11, ainsi que d'une troisième zone 19 située dans le prolongement axial interne de la première zone 11.

La jante 1 est également munie de plusieurs ergots 13, 14, 15, 16 situés sur la périphérie interne 12 de la jante 1. Plus précisément, la jante 1 comprend sur sa périphérie interne 12 et au niveau de son extrémité axiale externe, deux ergots 13, 14 diamétralement opposés. Et la jante 1 comprend sur sa périphérie interne 12 et au niveau de son extrémité axiale interne, laquelle est opposée axialement à l'extrémité axiale externe, deux autres ergots 15, 16, qui sont également diamétralement opposés.

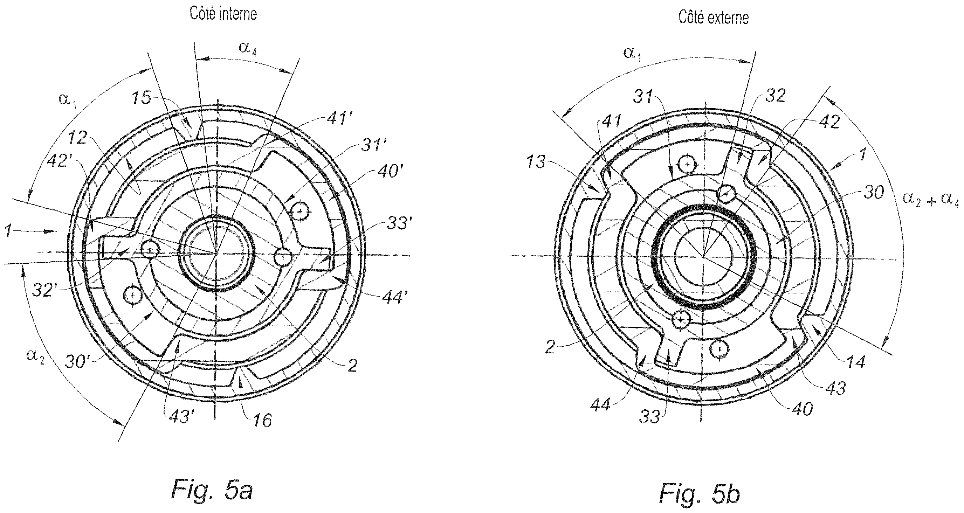

Par ailleurs, les ergots situés de part et d'autre, axialement, de la jante 1, à savoir les ergots 13, 14 d'une part (visibles du côté externe de la poulie) et les ergots 15, 16 d'autre part (visibles du côté interne de la poulie) sont, dans l'exemple décrit ici, décalés angulairement. Cependant, ce décalage n'est pas forcément existant car il dépend de la géométrie de l'élément 5 élastiquement déformable, et notamment lorsque cet élément est un ressort de torsion, du nombre de spires de ce ressort. L'élément élastiquement déformable sera décrit par la suite. Par exemple, on peut noter, sur les figures 5(a) et 5(b), que l'ergot 15 (côté interne) est décalé angulairement de l'ergot 13 (côté externe).

La poulie 100 comporte également un moyeu 2 solidaire d'un deuxième élément de transmission de puissance (par exemple un arbre d'un alternateur).

L'un des éléments de transmission de puissance est menant et l'autre est mené ou inversement, selon le mode de fonctionnement de la poulie 100, comme cela sera expliqué par la suite.

La poulie 100 comporte également deux indexeurs 30, 30'.

Le premier indexeur 30, situé du côté externe de la poulie 100, comprend une périphérie externe 31 munie de deux ergots 32, 33. Ces ergots 32, 33 sont diamétralement opposés.

Le deuxième indexeur 30' est quant à lui situé du côté interne de la poulie 100, autrement dit à l'opposé, le long de l'axe longitudinal AX de la poulie 100 du premier indexeur 30. Le deuxième indexeur 30' comprend également une périphérie externe 31' munie de deux ergots 32', 33'. Les deux ergots 32', 33' sont diamétralement opposés. Le côté interne de la poulie 100 est axialement opposé au côté externe de cette poulie 100.

Chaque indexeur 30, 30' est monté fixe sur le moyeu 2, par exemple par l'intermédiaire de pions de fixation P1, P2, P3, P4.

Par ailleurs, les indexeurs 30, 30' sont montés sur le moyeu 2 de sorte que les ergots 32, 33 du premier indexeur 30 d'une part et les ergots 32', 33' du deuxième indexeur 30' d'autre part sont également et dans le cas d'espèce, décalés angulairement. Par exemple, on peut noter, sur les figures 5(a) et 5(b), que l'ergot 32' (côté interne) est décalé angulairement de l'ergot 32 (côté externe). Bien entendu, ce décalage peut ne pas exister comme indiqué précédemment.

La poulie 100 comporte également deux couronnes 40, 40'.

Chaque couronne 40, 40' est montée de sorte à pouvoir tourner autour de l'axe longitudinal AX par rapport à la jante 1 et par rapport au moyeu 2.

La première couronne 40 est située du côté externe de la poulie 100. La première couronne 40 est située, radialement, entre le premier indexeur 30 et la jante 1.

La première couronne 40 comprend une première partie 45 située sous la deuxième zone 18 de la jante 1. La première couronne 40 comprend également une deuxième partie 46 se présentant sous la forme d'une première jupe cylindrique 460 et d'une deuxième jupe cylindrique 461 s'étendant, à partir de la première partie 45, selon l'axe longitudinal AX. Les jupes cylindriques 460, 461 sont concentriques. Chaque jupe cylindrique 460, 461 se situe sous la première zone 11 de la jante 1.

La première couronne 40 comprend également quatre butées 41, 42, 43, 44. Les butées 41, 42, 43, 44 sont diamétralement opposées deux à deux. Plus précisément, les butées 42, 44 sont diamétralement opposées et les butées 41, 43 sont également diamétralement opposées. Chaque butée 41, 42, 43, 44 présente une face radialement externe susceptible de coopérer avec un ergot 13, 14 de la jante 1 et une face radialement interne susceptible de coopérer avec un ergot 32, 33 du premier indexeur 30.

La deuxième couronne 40' est située du côté interne de la poulie 100. La deuxième couronne 40' est située, radialement, entre le premier indexeur 30' et la jante 1.

La deuxième couronne 40' comprend une première partie 45' située sous la troisième zone 19 de la jante 1. La deuxième couronne 40' comprend également une deuxième partie 46' se présentant sous la forme d'une première jupe cylindrique 460' et d'une deuxième jupe cylindrique 461' s'étendant, à partir de la première partie 45', selon l'axe longitudinal AX. Les jupes cylindriques 460', 461' sont concentriques. Chaque jupe cylindrique 460', 461' se situe sous la première zone 11 de la jante 1.

La deuxième couronne 40' comprend également quatre butées 41', 42', 43', 44'. Les butées 41', 42', 43', 44' sont diamétralement opposées deux à deux. Plus précisément, les butées 42', 44' sont diamétralement opposées et les butées 41', 43' sont également diamétralement opposées. Chaque butée 41', 42', 43', 44' présente une face radialement externe susceptible de coopérer avec un ergot 15, 16 de la jante 1 et une face radialement interne susceptible de coopérer avec un ergot 32', 33' du deuxième indexeur 30'.

Par ailleurs, les couronnes 40, 40' sont montées de sorte que les butées 41 à 44 de la première couronne 40 d'une part et les butées 41' à 44' de la deuxième couronne 40' d'autre part sont, dans le cas d'espèce, décalées angulairement. Ce décalage angulaire n'est pas systématique comme expliqué précédemment. Par exemple, on peut noter, sur les figures 5(a) et 5(b), que la butée 41' (côté interne) est décalée angulairement par rapport à la butée 41 (côté externe).

La poulie 100 est également munie d'un élément 5 élastiquement déformable, en l'occurrence et à titre d'exemple un ressort de torsion ou un élément à base d'élastomère.

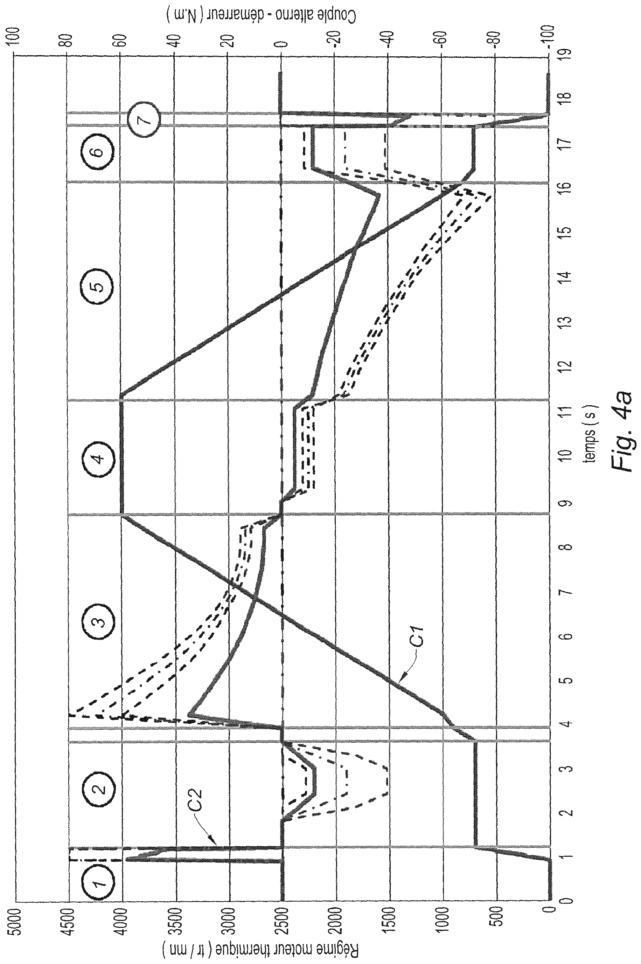

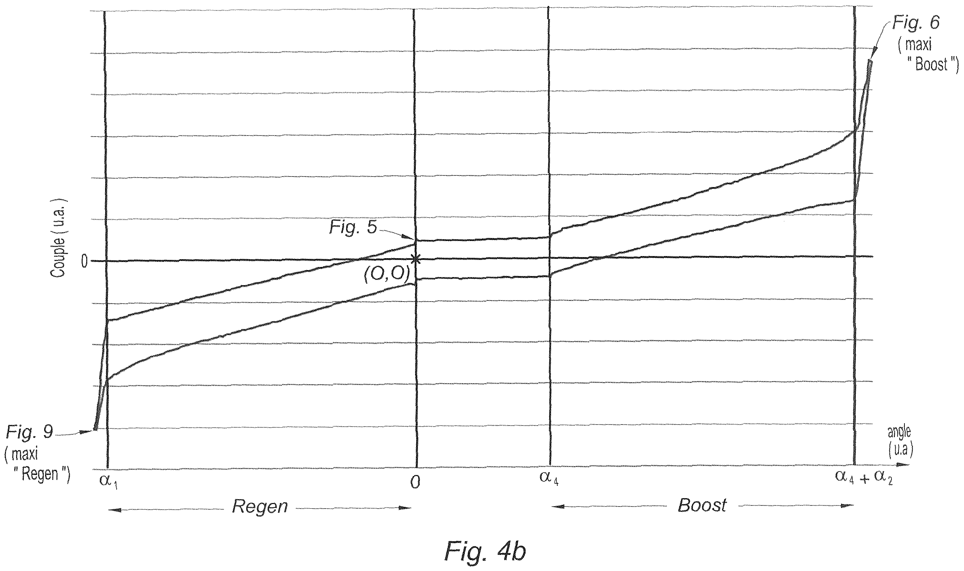

Les décalages angulaires mentionnés précédemment permettent de définir des plages de fonctionnement, comme cela sera expliqué par la suite, à l'appui de la figure 4. Il convient toutefois de relever que ces plages de fonctionnement dépendront de l'application envisagée, autrement dit du type de véhicule sur lequel la poulie 100 conforme à l'invention est destinée à être montée.

Dans la suite de la description relative au premier mode de réalisation, on assimilera l'élément 5 élastiquement déformable à un ressort de torsion.

Le ressort 5 de torsion est disposé autour du moyeu 2.

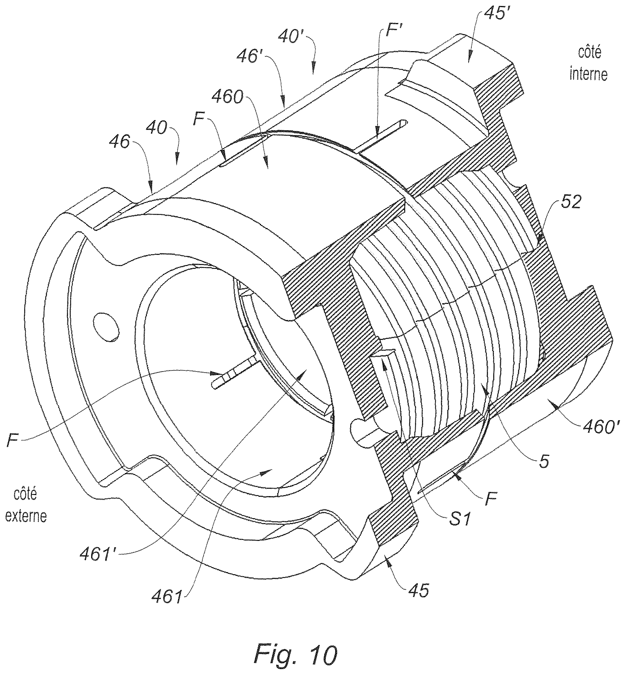

Le ressort 5 de torsion comprend une première extrémité 51 au contact (butée) de la première couronne 40 et une deuxième extrémité 52 au contact (butée) de la deuxième couronne 40'. Autrement dit, le ressort 5 de torsion est monté entre les deux couronnes 40, 40', comme on peut le voir sur la vue en perspective partiellement coupée de la figure 10. De plus, les indexeurs 30, 30' permettent d'installer le ressort 5 de torsion avantageusement sans jeu de contact, en réalisant une précontrainte. Les extrémités 51, 52 du ressort 5 de torsion sont alors parfaitement maintenues en contact permanent sur les couronnes 40, 40' grâce à cette précontrainte.

Le ressort 5 de torsion se situe entre les jupes cylindriques 460, 461, 460', 461'.

Tel que représenté sur les figures annexées, le ressort 5 de torsion travaille en l'occurrence en ouverture. Ainsi, lorsqu'il est soumis à une contrainte, le ressort 5 de torsion a tendance à s'ouvrir et à venir en contact avec les jupes supérieures 460, 460' de chacune des deux couronnes 40, 40' ; à savoir les jupes cylindriques 460, 460' situées, radialement, entre ledit ressort 5 de torsion et la jante 1. Pour cette raison, et en variante, on pourrait très bien ne prévoir que les jupes supérieures 460, 460' et pas les jupes inférieures 461, 461'. A contrario, si le ressort 5 de torsion venait à être monté pour travailler en fermeture, on pourrait ne prévoir que les jupes inférieures 461, 461' et pas les jupes supérieures 460, 460'. Les jupes inférieures 461, 461' sont celles qui sont situées, radialement, entre le ressort 5 de torsion et le moyeu 2.

Avantageusement, et comme représenté sur la figure 10, chaque jupe cylindrique 460, 460' prévoit au moins une fente F, F', avantageusement longitudinale. On peut faire de même pour les jupes cylindriques inférieures 461, 461'. Ces fentes F, F' permettent de faire circuler un lubrifiant, comme une graisse.

Par ailleurs, ces fentes F, F' permettent d'apporter une élasticité. Ceci est avantageux car cela permet d'avoir une montée de couple plus progressive lorsque le ressort 5 de torsion, du fait de sa déformation, vient au contact d'une jupe cylindrique 460, 460'. On évite ainsi une mise en butée trop brutale. Cela ne peut donc qu'améliorer la durée de vie de la poulie.

De telles fentes F, F' ne sont cependant pas obligatoires.

La poulie 100 comprend un capot 8. Le capot 8 est destiné à recouvrir la jante 1, du côté externe. Le capot 8 est associé à un bouchon d'étanchéité 10. De manière similaire, la poulie comprend un autre capot 8'. Le capot 8' est destiné à recouvrir la jante 1, du côté interne. Le capot 8' est associé à un joint d'étanchéité 10' venant dans une ouverture latérale de ce capot 8', du côté opposé au bouchon d'étanchéité 10.

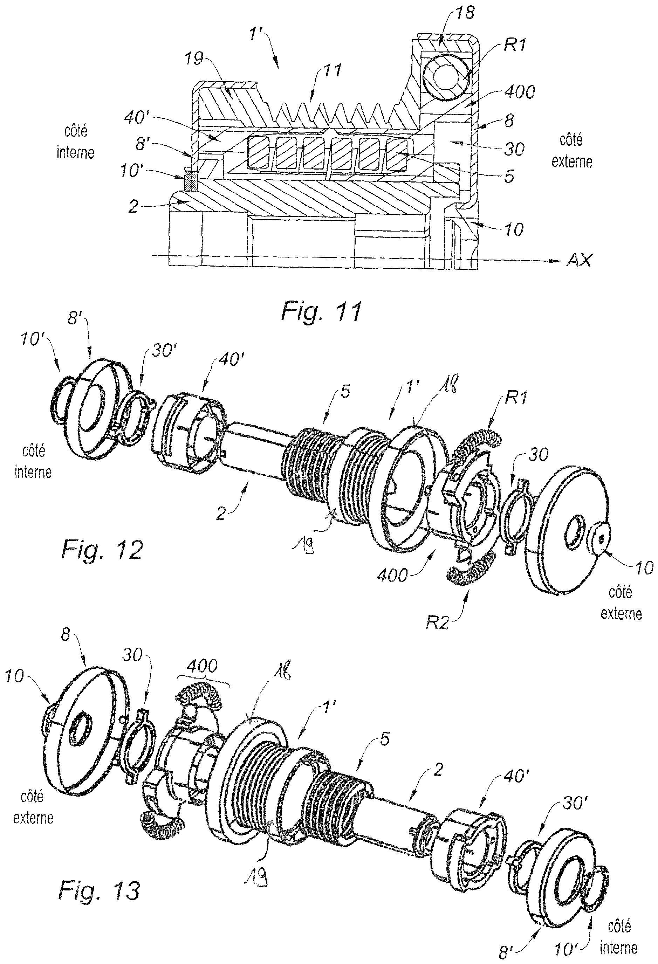

La poulie 100 peut enfin comporter un moyen de serrage 9, par exemple écrou, qui vient se fixer sur l'arbre de l'alternateur. On pourrait tout autant prévoir de monter le moyeu 2 directement sur l'arbre de l'alternateur, comme cela est d'ailleurs envisagé pour le deuxième mode de réalisation (figures 11 à 13).

Dans la conception présentée ci-dessus, chaque couronne 40, 40' fait office de palier de support de charge pour la jante 1 et le moyeu 2.

C'est donc chaque couronne 40, 40' qui permet d'assurer la rotation relative de la jante 1 par rapport au moyeu 2.

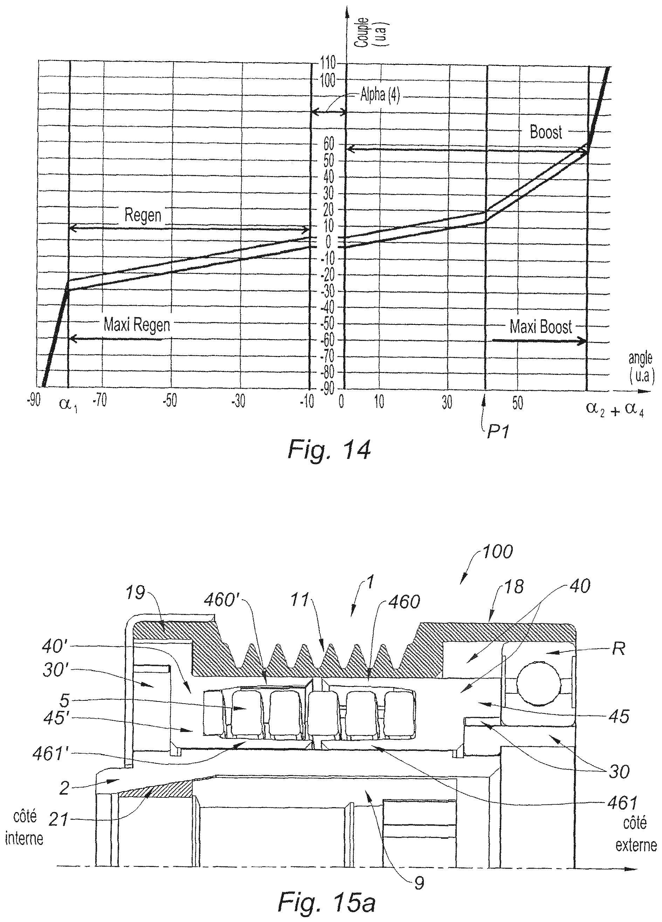

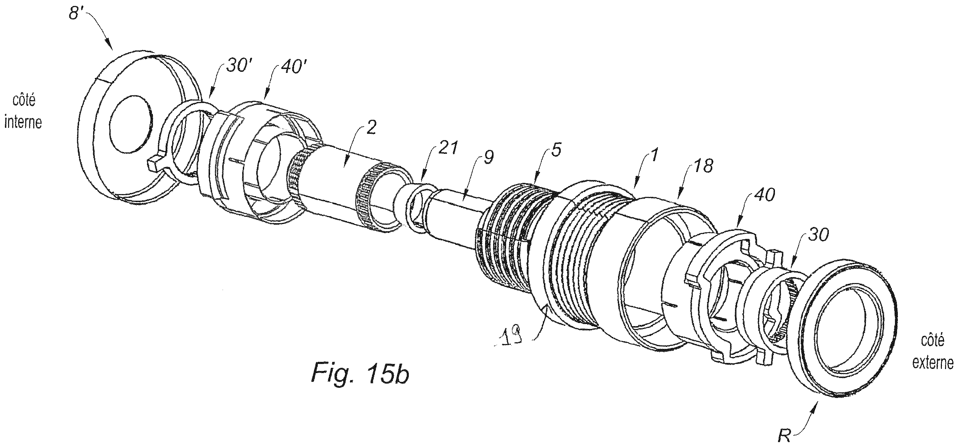

On peut néanmoins prévoir, en variante, un support de charge complémentaire tel qu'un roulement R comme représenté sur la figure 15. La figure 15(a) est une vue en coupe longitudinale de la poulie selon cette variante au premier mode de réalisation et la figure 15(b) cette même variante selon une vue éclatée. Sur cette figure 15, on note la présence d'un roulement R du côté externe de la poulie 100. Le roulement R est monté radialement entre la jante 1, et en l'occurrence plus précisément entre la périphérie interne de la partie 18 de la jante 1 et l'indexeur 30, qui est en l'occurrence celle située du côté externe de la poulie 100.

On comprend donc que, dans cette variante, la couronne 40 présente, par rapport à la figure 1, une forme modifiée pour permettre le logement du roulement R. Plus précisément, la parie 18 est élargie (axialement) pour pouvoir loger le roulement R. Par ailleurs, l'indexeur 30 est également modifié, i.e. présentant une dimension axiale élargie par rapport à celui de la figure 1, pour offrir une surface de support au roulement R.

Comme on peut le noter sur la figure 15, il est prévu un moyen de serrage 9. Ce moyen de serrage 9 vient pousser un cône 21 contre le moyeu 2 et le bloquer. Ce dispositif permet d'avoir un couple de desserrage qui peut être amélioré par rapport à celui de la figure 1.

Chaque couronne 40, 40' pourra être réalisée, à titre d'exemple, en un matériau choisi parmi les matériaux suivants :
- plastiques tels que les polyamide (PA), polyester, polyoxyméthylène (POM), polyétheréthercétone (PEEK), polysulfure de phénylène (PPS) ou des alliages de ceux-ci (lesdits matériaux plastiques pouvant être chargés ou non) ;
- thermoplastiques élastomériques (TPE) ;
- métaux tels qu'aluminium, bronze, laiton, acier et leurs alliages.

Nous allons maintenant décrire le fonctionnement de la poulie 100, tel que décrit sur les figures 1 à 3.

A cet effet, on s'appuie sur les figures 4 à 9.

Sur la figure 4(a), on a représenté le temps en abscisses (secondes) et en ordonnées, le régime moteur (courbe C1 d'une part) et le couple fourni par la poulie 100 (courbe C2) d'autre part. La courbe C2 fournit un couple statique, mais en fonction du niveau d'acyclisme, il convient d'y ajouter un couple dynamique et les différentes courbes en pointillés fournissent différents niveaux possibles du couple total (statique + dynamique). La courbe de la figure 4 a été obtenue sur un banc d'essai et à cet effet, une courroie de type poly V^{®} a été montée à une première extrémité sur la jante 1 et à une deuxième extrémité sur un vilebrequin d'un moteur thermique. Quant au moyeu 2, il a été monté sur un alterno-démarreur.

Sur cette figure 4(a), sept phases ont été différenciées.

A chaque fois, on ne parle dans la suite que du couple statique.

La première phase (phase 1) correspond à la phase de démarrage du moteur thermique. Initialement (courbe C1), le régime moteur est donc nul et le couple fourni par la poulie 100 est également nul.

Par convention, cela correspond aux positions des différents composants de la poulie 100 tel que représenté sur la figure 5. La figure 5 comprend la figure 5(a) qui montre une vue en coupe sur le côté interne de la poulie et la figure 5(b) qui montre une vue en coupe sur le côté externe de la poulie. Par convention également toute action motrice se traduit par un mouvement dans le sens horaire du composant moteur sur le côté externe de la poulie 100.

Ainsi, dans la position de la figure 5(b), l'ergot 32 de l'indexeur 30 est au contact de la butée 42 de la couronne 40. De même, l'ergot 33 de l'indexeur 30 est au contact de la butée 44 de la couronne 40. Sur la figure 5(a), l'ergot 32' de l'indexeur 30' est au contact de la butée 42' de la couronne 40'. De même, l'ergot 33' de l'indexeur 30' est au contact de la butée 44' de la couronne 40'.

On notera que sur la figure 4(b), on a représenté l'évolution du couple fourni par la poulie en fonction de l'angle (la nature de la pièce à considérer pour cet angle dépend du mode de fonctionnement comme cela sera expliqué par la suite).

Lors de l'action de démarrage, via l'alterno-démarreur auquel la poulie 100 conforme à l'invention est reliée par le moyeu 2, ce dernier est mis en rotation dans le sens horaire sur la figure 5(b), donc dans le sens anti-horaire sur la figure 5(a).

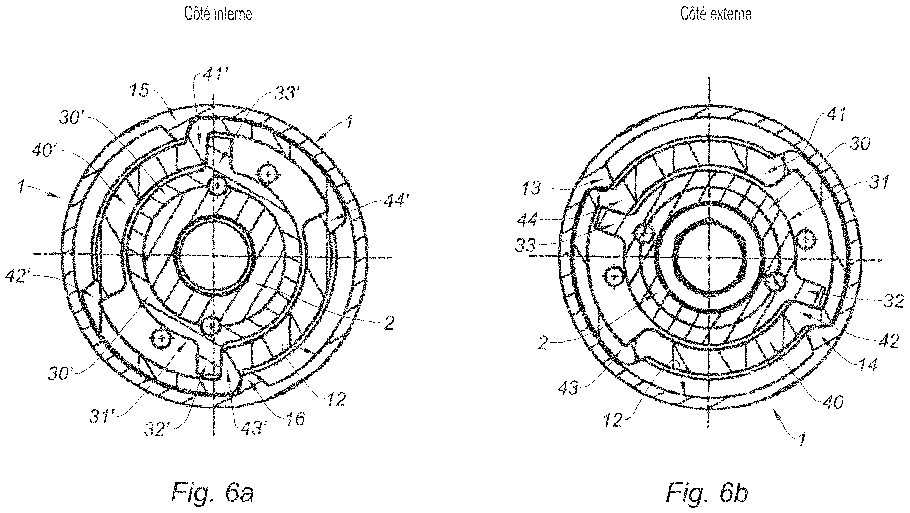

Ce mouvement entraîne la couronne 40 dans le sens horaire également (figure 5(b)), laquelle peut se déplacer, sur un angle α₄ + α₂, jusqu'à ce que la butée 42 (respectivement la butée 44) de la couronne 40 atteigne l'ergot 14 (respectivement l'ergot 13) de la jante 1, comme cela est représenté sur la figure 6(b). La mise au contact de la butée 42 contre l'ergot 14 coïncide avec la mise au contact de la butée 44 avec l'ergot 13.

Pendant ce temps, la couronne 40' se déplace en sens anti-horaire sur la figure 5(a) jusqu'à ce que la butée 41' vienne au contact de l'ergot 15 (angle α₄ - angle sur lequel le ressort 5 de torsion n'est pas mis à contribution). La mise en contact de la butée 41' de la couronne 40' coïncide avec la mise en contact de la butée 43' avec l'ergot 16 de la jante 1. Puis, l'indexeur 30' se met à tourner dans la couronne 40', toujours en sens anti-horaire sur la figure 5(a) d'un angle α₂ jusqu'à ce que l'ergot 33' vienne au contact de la butée 41' de la couronne 40' qui était alors déjà en contact avec l'ergot 15 de la jante 1. De même, l'ergot 32' se déplace du même angle α₂ jusqu'à ce que l'ergot 32' vienne au contact de la butée 43'. La mise au contact de l'ergot 33' avec la butée 41' coïncide avec la mise au contact de l'ergot 32' avec la butée 43'.

Au cours du passage de la configuration de la figure 5 vers celle de la figure 6, l'élément élastiquement déformable 5, dont chacune des extrémités 51, 52 est au contact d'une couronne 40, 40', ne travaille pas sur l'angle α₄, mais travaille sur l'angle α₂, comme on peut le constater sur la figure 4(b). Sur la figure 1, le parcours de l'angle α₂ se traduit par une montée rapide du couple. Le maximum de couple correspond à la configuration de la figure 6, où la figure 6(a) représente le côté interne de la poulie 100 et la figure 6(b) le côté externe de la poulie 100.

Dans le cas d'espèce, l'angle α₂ vaut environ 70° et l'angle α₄ vaut environ 30°.

Le moteur thermique est alors démarré, du fait du couple passé depuis le moyeu 2 vers la jante 1, laquelle est reliée au moteur par l'intermédiaire de la courroie.

Le démarrage du moteur thermique implique une action motrice sur la jante 1, par l'intermédiaire de la courroie. Le couple chute donc rapidement pour revenir vers la valeur nulle. En conséquence, la poulie 100 repasse de sa configuration de la figure 6 vers sa configuration de la figure 5, où la fin de cette première phase (phase 1) est atteinte. Ainsi, en comparant la figure 6(b) à la figure 5(b), l'indexeur 30 et la couronne 40 parcourent alors l'angle α₂ + α₄ dans l'autre sens et, l'indexeur 30' parcourt l'angle α₂ dans le sens opposé dans la couronne 40', cette couronne 40' parcourant quant à elle l'angle α₄ en sens opposé.

A la fin de cette première phase, le moteur thermique tourne au ralenti.

La deuxième phase (phase 2) correspond à un maintien du moteur thermique au ralenti. Compte tenu du régime moteur faible, on rencontre des phénomènes d'acyclisme. L'acyclisme se traduit par des variations d'accélération agissant sur la jante qui a tendance à faire des mouvements de va-et-vient en sens horaire et en sens anti-horaire. La conséquence est une réduction des variations de tension. La poulie filtre alors ces phénomènes grâce à son travail sur la raideur élastique.

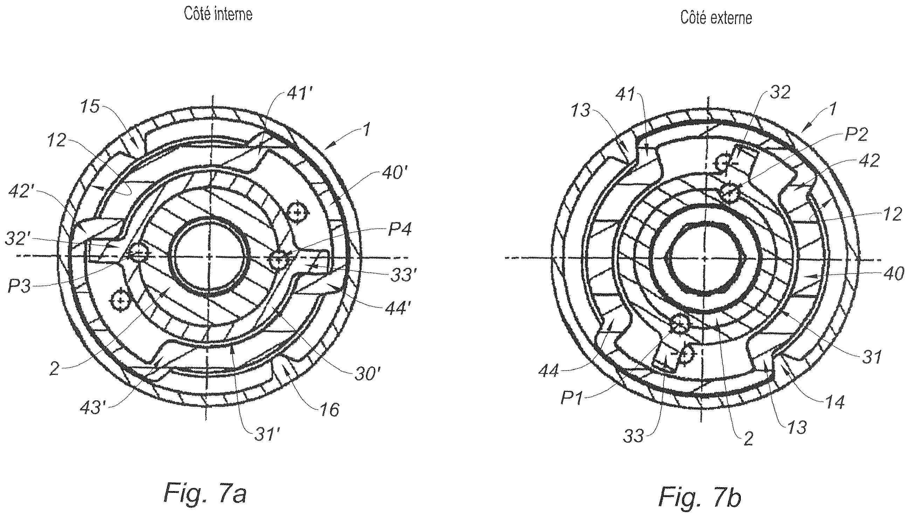

En pratique, et en moyenne pendant cette phase 2, la poulie 100 se trouve alors dans la configuration de la figure 7, où la figure 7(b) représente une vue en coupe de la poulie depuis le côté externe et la figure 7. Pendant cette phase, l'élément élastiquement déformable 5 remplit sa fonction de filtrage pour corriger les effets de l'acyclisme.

La troisième phase (phase 3) correspond au mode « boost ».

Lors de cette phase, on cherche initialement à apporter au moteur thermique du couple lors d'une accélération (augmentation du régime moteur - courbe C1).

Le moyeu 2 est alors l'élément menant capable de faire travailler l'élément 5 élastiquement déformable sous l'effet de la différence de vitesse entre le moyeu 2 et la jante 1. On passe alors d'une configuration conforme à celle de la figure 7 vers celle de la figure 6, en passant d'ailleurs par celle de la figure 5. Lorsque le couple est à son maximum, la poulie 100 est dans la configuration de la figure 6. Cette montée de couple liée au mode « boost » est donc assimilable, dans le fonctionnement de la poulie, à ce qui a été décrit précédemment lors de la montée de couple de la première phase. On comprend donc incidemment que, pendant cette montée du couple, on parcourt à nouveau l'angle α₂ (alpha 2). Il est à noter que la valeur maximum du couple dans ce mode « boost » peut être augmentée ou diminuée en gérant la valeur de cet angle. Ainsi, en augmentant la valeur de cet angle α₂ (alpha 2), il est possible d'augmenter le couple maximum atteignable pendant cette troisième phase. A contrario, en diminuant la valeur de cet angle α₂ (alpha 2), il est possible de diminuer la couple maximum atteignable pendant cette troisième phase.

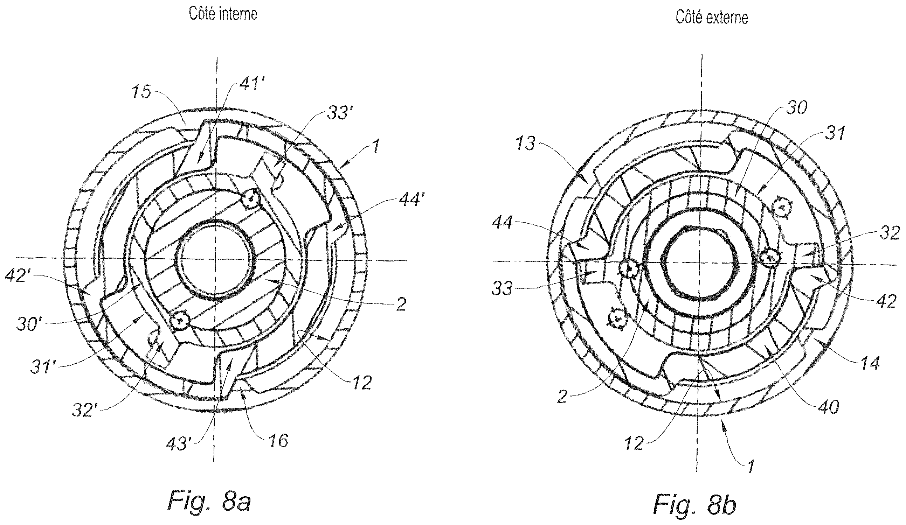

Le régime moteur augmentant, le couple fourni par l'alternateur diminue jusqu'à devenir nul à la fin de cette phase. La poulie 100 passe alors de la configuration de la figure 6 vers celle de la figure 5, de manière similaire à la descente de couple qui a lieu pendant la première phase. On a représenté sur la figure 8 (figure 8(a) : côté interne de la poulie 100 et figure 8(b) : côté externe de la poulie 100), une configuration intermédiaire de la poulie 100 entre le couple maximum (figure 6) et le couple nul (figure 5). Dans la configuration de la figure 8, on note par exemple, sur la figure 8(b) que l'indexeur 30 reste au contact de la couronne 40, par l'intermédiaire des ergots 32, 33 et des butées 42, 44, mais que les butées 42, 44 de la couronne 40 ne sont plus au contact des ergots 13, 14 respectivement de la jante 1, contrairement à ce que l'on peut constater sur la figure 6.

La quatrième phase (phase 4) correspond à une phase au cours de laquelle le régime moteur est maintenu constant, à régime moteur élevé.

On peut assimiler cette quatrième phase à la deuxième phase. Aussi, on pourra trouver la poulie 100 dans la configuration de la figure 7 avec toutefois une différence liée au fait qu'à régime élevé, le phénomène d'acyclisme est nettement moins prononcé qu'au ralenti moteur (phase 2).

La cinquième phase est une phase dite « Regen ». Ici, on cherche à fournir de l'énergie électrique à différents composants du véhicule, notamment pour le stockage « batterie », lors de la décélération du véhicule (chute du régime moteur - courbe C1).

Au début de cette cinquième phase, la poulie 100 se situe donc dans une configuration conforme à celle de la figure 7. La jante 1 est l'élément menant et elle se déplace dans le sens horaire sur la figure 7(b) et donc en sens anti-horaire sur la figure 7(a).

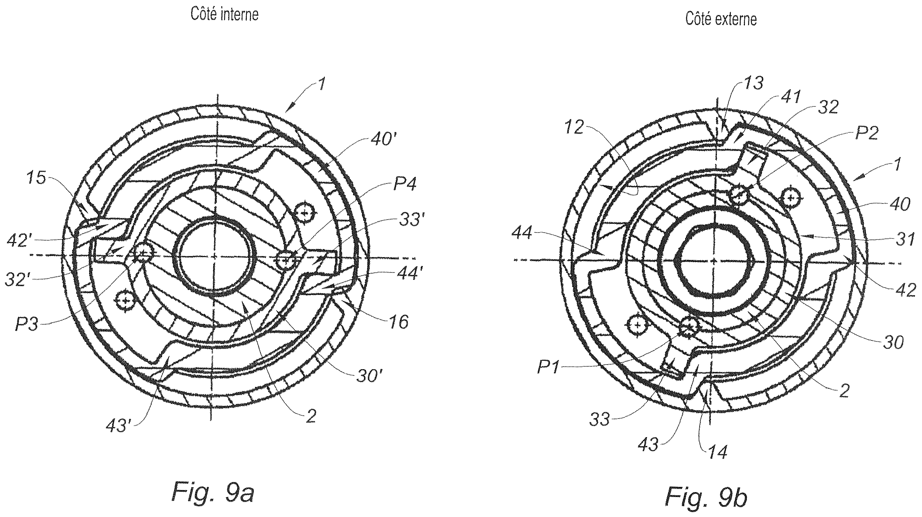

La jante 1 entraîne avec elle la couronne 40, par l'intermédiaire du contact entre l'ergot 13 de la jante 1 et la butée 41 de la couronne 40 ainsi que par l'intermédiaire du contact entre l'ergot 14 de la jante 1 et la butée 43 de la couronne 40. Cet entraînement continue jusqu'à ce que la butée 41 vienne au contact de l'ergot 32 de l'indexeur 30, et respectivement jusqu'à ce que la butée 43 vienne au contact de l'ergot 33 de l'indexeur 30, comme cela est représenté sur la figure 9(b). Sur la figure 9(b), on se situe donc, sur la figure 4(a), à l'angle α₁. Dans cette même position, sur la figure 9(a), l'ergot 15 de la jante 1 est alors au contact de la butée 42' de la couronne 40' et l'ergot 16 de la jante 1 au contact de la butée 44' de la couronne 40'. La configuration de la figure 9 correspond au couple maximum (en valeur absolue) de cette cinquième phase. Pendant tout cette montée (en valeur absolue) du couple, l'élément 5 élastiquement déformable monté entre les deux couronnes 40, 40', est déformé et fournit le couple souhaité jusqu'à la mise en butée où le couple maximum (en valeur absolue) est atteint.

Lorsque le couple est maximum (en valeur absolue), on peut relever que la poulie 100 se situe dans une configuration que l'on peut qualifier de symétriquement opposée, par rapport à celle de la figure 6, laquelle correspond au maximum de couple de la première phase ou de la troisième phase. En effet, et par exemple, sur la figure 9(b), l'ergot 13 (et plus précisément sa face droite) de la jante 1 est en contact avec la butée 41 (et plus précisément sa face gauche) de la couronne 40, cette butée 41 étant elle-même au contact (plus précisément par sa face droite) avec la butée 32 (et plus précisément sa face gauche de l'indexeur 30). Au contraire, sur la figure 6(b), on note que l'ergot 13 (et plus précisément sa face gauche) est au contact de la butée 44 (et plus précisément sa face droite) de la couronne 40, cette butée 44 étant elle-même au contact (et plus précisément par sa face gauche) de la butée 33 de l'indexeur 30. Une remarque du même type peut être effectuée en comparant les figures 9(a) et 6(a).

Par ailleurs, il convient de noter qu'à ce maximum de couple (en valeur absolue), le régime de ralenti du moteur est pratiquement atteint.

Enfin, un point à relever est qu'entre le début de la quatrième phase (configuration de la figure 5) et le maximum (en valeur absolue) du couple dans la cinquième phase (« Regen » ; configuration de la figure 9), on parcourt tout l'angle α₁ (alpha 1), tel que représenté sur la figure 5(b), valant en l'occurrence environ 60°.

Ainsi, la somme des angles α₁, α₂ et α₄ vaut, dans cet exemple, environ 160°, le complémentaire pour obtenir 180° provenant de l'épaisseur des butées et ergots.

La sixième phase (phase 6) correspond à un maintien au ralenti. La poulie 100 se retrouve dans la configuration de la figure 7. La sixième phase est similaire à la deuxième phase. On pourra donc se reporter aux commentaires fournis pour cette deuxième phase.

Enfin, la septième phase est une phase d'arrêt du moteur thermique. D'un point de vue pratique, cela correspond à l'exact opposé de ce qui a été décrit à l'appui de la première phase. On profite cependant de l'énergie cinétique du moteur lors de son arrêt pour générer du courant, notamment apte à charger la batterie du véhicule. Cette septième phase permet aussi d'arrêter le moteur thermique plus rapidement.

Un deuxième mode de réalisation d'un alterno-démarreur conforme à l'invention est décrit à l'appui des figures 11 à 13.

Sur le plan structurel, la couronne 40 prévue du côté axialement externe de la poulie 10 des figures 1 à 3 est modifiée.

Cette couronne modifiée est référencée 400.

La couronne 400 présente en effet un diamètre externe plus grand que la couronne 40 pour pouvoir y loger deux éléments élastiques R1, R2, avantageusement des ressorts. Lorsque des ressorts R1, R2 sont prévus, il peut s'agir de ressorts de compression, comme cela est visible sur les figures 12 et 13, ou d'autres types de ressorts. En variante, on peut encore envisager en tant qu'éléments élastiques R1, R2 des élastomères.

Les éléments élastiques R1, R2 sont montés en parallèle par rapport à l'élément 5 élastiquement déformable. Ces éléments élastiques R1, R2 permettent donc d'apporter une raideur additionnelle à celle de l'élément 5 élastiquement déformable. Les éléments élastiques R1, R2 sont avantageusement diamétralement opposés. Les éléments élastiques R1, R2 présentent également avantageusement une même raideur.

Toujours sur le plan structurel, et afin de pouvoir loger la couronne 400 dans la jante 1', cette dernière présente, du côté externe de la poulie 100', un diamètre plus grand que celui de la jante 1 du premier mode de réalisation.

Par ailleurs, dans ce mode de réalisation, le moyeu 2 est agencé pour être monté directement sur l'arbre de l'alternateur.

Ce sont les seules modifications structurelles.

Le fonctionnement de la poulie 100 selon ce deuxième mode de réalisation est similaire à celui décrit pour le premier mode de réalisation.

Toutefois, l'intérêt des éléments élastiques R1, R2 réside dans leur apport de raideur additionnelle à l'élément 5 élastiquement déformable, ce qui permet d'assurer un filtrage supplémentaire des phénomènes liés à l'acyclisme au début de la troisième phase (figure 4, phase de « boost ») et ce, avant la mise en butée de la figure 6 (pic de couple de la troisième phase).

En effet, lors d'une montée de couple importante, le filtrage assuré par l'élément 5 élastiquement déformable n'est pas suffisant du fait de sa mise en butée.

On a représenté sur la figure 14, l'évolution du couple fourni par la poulie 100' en fonction de l'angle pour ce deuxième mode de réalisation, par analogie à ce qui a été représenté sur la figure 4(b) pour le premier mode de réalisation.

On note la présence, sur cette figure 14, d'un point de fonctionnement angulaire P1 à partir duquel les ressorts R1, R2 sont sollicités. Cette sollicitation se traduit par une rupture de la pente d'évolution du couple.

Il faut bien voir que la présence de deux éléments élastiques R1, R2 n'est pas obligatoire. On pourrait n'en prévoir qu'un, par exemple l'élément élastique R1, toujours monté en parallèle par rapport à l'élément 5 élastiquement déformable.

Il faut bien voir aussi que la présence d'éléments élastiques R1, R2 n'est pas non plus obligatoire. En effet, une autre façon de gérer l'acyclisme dans la troisième phase est d'imposer la montée de couple à un régime moteur plus élevé qu'il ne l'est sur la figure 4. D'un point de vue pratique, l'intérêt de mettre en œuvre ce deuxième mode de réalisation dépendra du véhicule concerné, même si, par défaut, il peut être intéressant de le mettre en œuvre quel que soit le type de véhicule.

En outre, il est possible de prévoir, en variante à ce deuxième mode de réalisation l'ajout d'un support de charge tel qu'un roulement R comme proposé sur la figure 15.

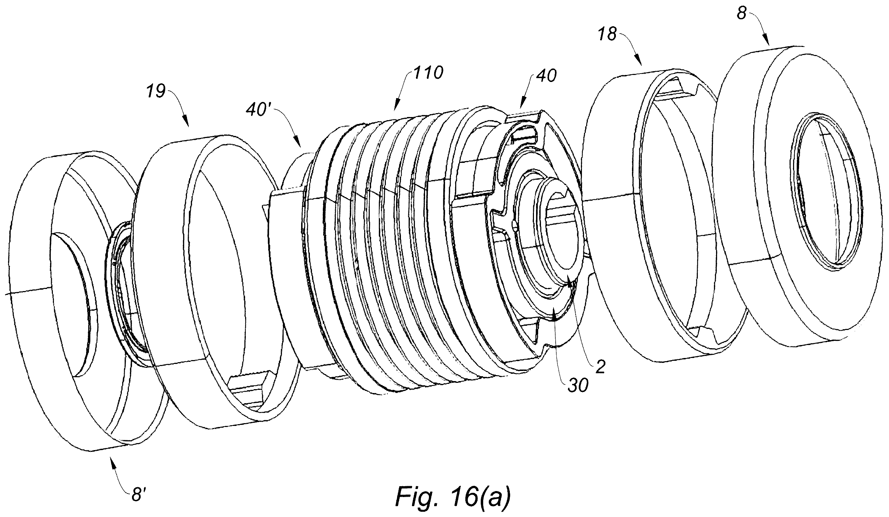

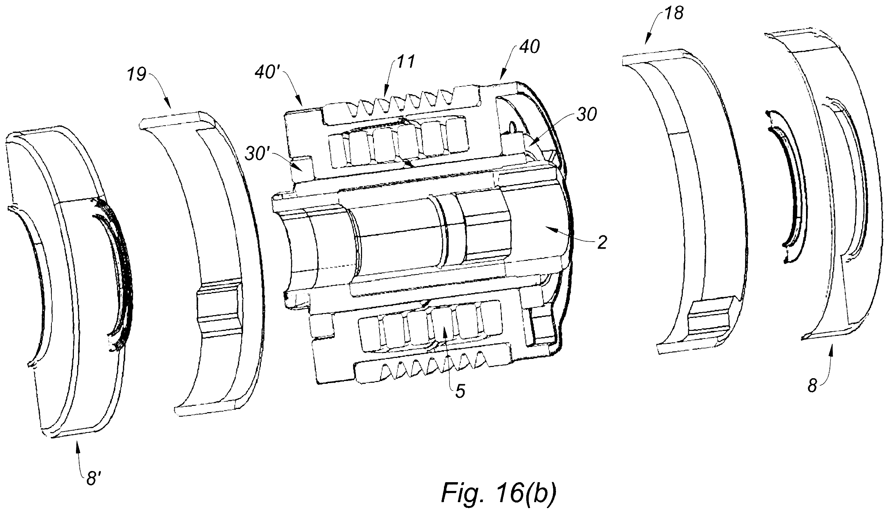

Enfin, il est encore possible de prévoir, une autre variante de réalisation, comme proposé sur la figure 16.

Par rapport au premier mode de réalisation illustré à l'appui des figures 1 à 10, la jante 1 est modifiée.

En effet, dans cette variante de réalisation au premier mode de réalisation, les trois zones 11, 18 et 19 sont faites de plusieurs parties distinctes montées les unes aux autres, alors que ces zones sont d'un seul tenant dans le premier mode de réalisation.

Tout le reste est identique.

Sur le plan fonctionnel, rien n'est changé.Cette variante de réalisation présente l'avantage de faciliter le montage de la poulie. En effet, en montant les deux zones 18, 19 de la jante 1 après le montage des couronnes 40, 40' et indexeurs 30, 30', le montage de ces derniers est facilité.

Comme pour le premier mode de réalisation, la périphérie interne 12 de la jante 1 comportant les ergots correspond aux zones 18, 19.

On notera que la figure 16 est une variante de réalisation au premier mode de réalisation, mais le fait de prévoir plusieurs zones distinctes est tout autant applicable en tant que variante au deuxième mode de réalisation.

Quel que soit le mode de réalisation envisagé, on pourra adapter les valeurs des angles en fonction des contraintes imposées par le type de véhicule sur lequel la poulie 100, 100' conforme à l'invention est destinée à être montée. A titre d'exemple, on peut concevoir la poulie de sorte à augmenter l'angle α₂ pour augmenter le couple maximum dans le mode « boost ». Ceci peut notamment s'effectuer en concevant la poulie de sorte que l'angle α₄ = 0, ce qui permet de ne pas toucher à la valeur de l'angle α₁ et donc au couple maximum (en valeur absolue) dans la phase « Regen ». D'un point de vue pratique, c'est notamment le décalage angulaire entre les ergots 32, 32' d'une part et 33, 33' d'autre part des indexeurs 30, 30' et/ou le décalage angulaire entre les ergots 13, 14 d'une part et 15, 16 d'autre part de la jante qui vont permettre cet ajustement des différentes plages angulaires de fonctionnement α₁, α₂, ou α₄.

## Revendications

1. Poulie (100, 100') munie d'un axe longitudinal (AX), ladite poulie comportant un côté externe et un côté interne axialement opposé au côté externe ainsi qu':
- une jante (1) comprenant :
une zone (11) destinée à recevoir une courroie reliant la jante à un premier élément de transmission de puissance,
une périphérie interne (12) munie d'une pluralité d'ergots (13,14, 15, 16), au moins deux ergots (13, 14), diamétralement opposés, étant agencés du côté externe de la poulie (100, 100') et au moins deux autres ergots (15, 16), également diamétralement opposés, étant agencés du côté interne de la poulie (100, 100') ;
- un moyeu (2) destiné à être solidaire d'un deuxième élément de transmission de puissance ;
l'un des éléments de transmission de puissance étant menant et l'autre étant mené ou inversement ;
- au moins deux couronnes (40, 400 ;40'), chaque couronne (40, 400, 40') comportant au moins quatre butées (41, 42, 43, 44; 41', 42', 43', 44') diamétralement opposées deux à deux (42, 44 ; 41, 43 ; 42', 44' ; 41', 43') aptes à coopérer avec les ergots (13, 14, 15, 16) de la jante (1) de sorte à pouvoir être entraînées en rotation autour dudit axe longitudinal (AX) ;
- un élément (5) élastiquement déformable dont une première extrémité (51) est montée au contact de la première couronne (40, 400) et dont une deuxième extrémité (52) est montée au contact de la deuxième couronne (40') ; **caractérisée en ce que** la poulie (100, 100') comprend en outre :
- au moins deux indexeurs (30, 30') montés fixe par rapport au moyeu (2), le premier indexeur (30) étant agencé du côté externe de la poulie (100) et muni sur sa périphérie externe (31) d'au moins deux ergots (32, 33) diamétralement opposés et le deuxième indexeur (30') étant agencé du côté interne de la poulie (100, 100') et muni sur sa périphérie externe (31') d'au moins deux ergots (32', 33') diamétralement opposés ;
l'une (40, 400) des couronnes étant montée entre la périphérie interne (12) de la jante (1) et la périphérie externe (31) du premier indexeur (30) et l'autre (40') des couronnes étant montée entre la périphérie interne (12) de la jante (1) et la périphérie externe (31') du deuxième indexeur (30'), lesdites au moins quatre butées de chaque couronne étant ainsi aptes à coopérer avec les ergots (32, 33, 32', 33') des indexeurs (30, 30') de sorte à pouvoir être entraînées en rotation autour dudit axe longitudinal (AX).

2. Poulie (100, 100') selon la revendication 1, dans laquelle chaque couronne (40, 400 ; 40') comprend une première partie (45, 45') comportant lesdits ergots (13, 14 ; 15, 16) et une deuxième partie (46, 46') s'étendant axialement, sous ladite zone (11) destinée à recevoir une courroie reliant la jante (1) à un premier élément de transmission de puissance, à partir de la première partie (45, 45'), chaque deuxième partie (46, 46') se présentant sous la forme d'au moins une jupe cylindrique (460, 460', 461, 461') située, radialement, soit entre l'élément (5) élastiquement déformable et la jante (1) pour les deux parties (46, 46'), soit entre l'élément (5) élastiquement déformable et le moyeu (2) pour les deux parties (46, 46').

3. Poulie (100, 100') selon la revendication précédente, dans laquelle chaque deuxième partie (46, 46') comprend une deuxième jupe cylindrique, concentrique avec la première jupe, l'élément (5) élastiquement déformable étant alors logé entre lesdites jupes cylindriques (460, 461, 460', 461').

4. Poulie (100, 100') selon l'une des revendications précédentes, dans laquelle au moins l'une des jupes cylindriques (460, 460', 461, 461') comprend au moins une fente (F, F'), avantageusement longitudinale.

5. Poulie (100, 100') selon l'une des revendications précédentes, dans laquelle la ou chaque couronne (40, 40', 400) est réalisée en un matériau choisi parmi les plastiques tels que les polyamide (PA), polyester, polyoxyméthylène (POM), polyétheréthercétone (PEEK), polysulfure de phénylène (PPS) ou des alliages de ceux-ci ou les thermoplastiques élastomères (TPE).

6. Poulie (100') selon l'une des revendications précédentes, dans laquelle il est prévu, sur l'une (400) des couronnes (400, 40'), au moins un premier ressort additionnel (R1) monté en parallèle avec l'élément (5) élastiquement déformable.

7. Poulie (100') selon l'une des revendications précédentes, dans laquelle il est prévu, sur ladite couronne (400), un deuxième ressort additionnel (R2), également monté en parallèle avec l'élément (5) élastiquement déformable, le premier et le deuxième ressorts (R1, R2) additionnels présentant une même raideur et étant agencés, sur ladite couronne (400), de façon diamétralement opposée.

8. Poulie (100, 100') selon l'une des revendications précédentes, dans laquelle l'élément (5) élastiquement déformable est un ressort de torsion.

9. Poulie (100) selon l'une des revendications précédentes, dans laquelle il est prévu un support de charge (R), par exemple un roulement, disposé radialement entre l'un (30) des indexeurs (30, 30') et la jante (1).

## Patentansprüche

1. Riemenscheibe (100, 100'), die mit einer Längsachse (AX) versehen ist, wobei die Riemenscheibe eine Außenseite und eine der Außenseite axial gegenüberliegende Innenseite aufweist, sowie:
- einen Radkranz (1), umfassend:
einen Bereich (11) zur Aufnahme eines Riemens, der den Radkranz mit einem ersten Kraftübertragungselement verbindet,
einen Innenumfang (12), der mit einer Vielzahl von Nasen (13, 14, 15, 16) versehen ist, wobei mindestens zwei diametral gegenüberliegende Nasen (13, 14) auf der Außenseite der Riemenscheibe (100, 100') angeordnet sind und mindestens zwei weitere Nasen (15, 16), die ebenfalls diametral gegenüberliegen, auf der Innenseite der Riemenscheibe (100, 100') angeordnet sind;
- eine Nabe (2) zur Befestigung an einem zweiten Kraftübertragungselement;
wobei eines der Kraftübertragungselemente antreibend ist und das andere angetrieben wird oder umgekehrt;
- mindestens zwei Kränze (40, 400; 40'), wobei jeder Kranz (40, 400, 40') mindestens vier paarweise diametral gegenüberliegende Anschläge (41, 42, 43, 44; 41', 42', 43', 44') (42, 44; 41, 43; 42', 44'; 41', 43') aufweist, die in der Lage sind, mit den Nasen (13, 14, 15, 16) des Radkranzes (1) zusammenzuwirken, um in Drehung um die Längsachse (AX) angetrieben werden zu können;
- ein elastisch verformbares Element (5), von dem ein erstes Ende (51) in Kontakt mit dem ersten Kranz (40, 400) und ein zweites Ende (52) in Kontakt mit dem zweiten Kranz (40') angebracht ist; **dadurch gekennzeichnet, dass** die Riemenscheibe (100, 100') weiter Folgendes umfasst:
- mindestens zwei in Bezug auf die Nabe (2) fest montierte Indexierer (30, 30'), wobei der erste Indexierer (30) an der Außenseite der Riemenscheibe (100) angeordnet und an seinem Außenumfang (31) mit mindestens zwei diametral gegenüberliegenden Nasen (32, 33) versehen ist, und der zweite Indexer (30') an der Innenseite der Riemenscheibe (100, 100') angeordnet und an ihrem Außenumfang (31') mit mindestens zwei diametral gegenüberliegenden Nasen (32', 33') versehen ist;
wobei der eine (40, 400) der Kränze zwischen dem Innenumfang (12) des Radkranzes (1) und dem Außenumfang (31) des ersten Indexierers (30) angebracht ist und der andere (40') der Kränze zwischen dem Innenumfang (12) des Radkranzes (1) und dem Außenumfang (31') des zweiten Indexierers (30') angebracht ist, wobei die mindestens vier Anschläge jedes Kranzes in der Lage sind, mit den Nasen (32, 33, 32', 33') der Indexierer (30, 30') zusammenzuwirken, um in Drehung um die Längsachse (AX) angetrieben werden zu können.

2. Riemenscheibe (100, 100') nach Anspruch 1, wobei jeder Kranz (40, 400; 40') einen ersten Abschnitt (45, 45') umfasst, der die Nasen (13, 14; 15, 16) aufweist, und einen zweiten Abschnitt (46, 46'), der sich axial unter dem Bereich (11), der zur Aufnahme eines Zahnkranzes bestimmt ist, der den Radkranz (1) mit einem ersten Kraftübertragungselement verbindet, ausgehend von dem ersten Abschnitt (45, 45'), erstreckt, wobei jeder zweite Abschnitt (46, 46') die Form von mindestens einer zylindrischen Schürze (460, 460', 461, 461') aufweist, die radial entweder zwischen dem elastisch verformbaren Element (5) und dem Radkranz (1) für die beiden Abschnitte (46, 46') oder zwischen dem elastisch verformbaren Element (5) und der Nabe (2) für die beiden Abschnitte (46, 46') angeordnet ist.

3. Riemenscheibe (100, 100') nach dem vorstehenden Anspruch, wobei jeder zweite Abschnitt (46, 46') eine zweite zylindrische Schürze umfasst, die konzentrisch zur ersten Schürze ist, wobei das elastisch verformbare Element (5) dann zwischen den zylindrischen Schürzen (460, 461, 460', 461') untergebracht ist.

4. Riemenscheibe (100, 100') nach einem der vorstehenden Ansprüche, wobei mindestens eine der zylindrischen Schürzen (460, 460', 461, 461') mindestens einen Schlitz (F, F'), vorteilhafterweise in Längsrichtung, umfasst.

5. Riemenscheibe (100, 100') nach einem der vorstehenden Ansprüche, wobei der oder jeder Kranz (40, 40', 400) aus einem Material hergestellt ist, das aus Kunststoffen wie Polyamid (PA), Polyester, Polyoxymethylen (POM), Polyetheretherketon (PEEK), Polyphenylensulfid (PPS) oder Legierungen davon oder elastomeren Thermoplasten (TPE) ausgewählt ist.

6. Riemenscheibe (100') nach einem der vorstehenden Ansprüche, wobei auf einem (400) der Kränze (400, 40') mindestens eine erste zusätzliche Feder (R1) vorgesehen ist, die parallel zu dem elastisch verformbaren Element (5) angebracht ist.

7. Riemenscheibe (100') nach einem der vorstehenden Ansprüche, wobei auf dem Kranz (400) eine zweite zusätzliche Feder (R2) vorgesehen ist, die ebenfalls parallel zu dem elastisch verformbaren Element (5) angebracht ist, wobei die erste und die zweite zusätzliche erste Feder (R1, R2) die gleiche Steifigkeit aufweisen und auf dem Kranz (400) diametral gegenüberliegend angeordnet sind.

8. Riemenscheibe (100, 100') nach einem der vorstehenden Ansprüche, wobei das elastisch verformbare Element (5) eine Torsionsfeder ist.

9. Riemenscheibe (100) nach einem der vorstehenden Ansprüche, wobei ein Lastträger (R), z.B. ein Lager, der radial zwischen einem (30) der Indexierer (30, 30') und dem Radkranz (1) angeordnet ist, vorgesehen ist.

## Claims

1. Pulley (100, 100') equipped with a longitudinal axis (AX), said pulley comprising an outer side and an inner side axially opposite the outer side, as well as:
- a rim (1) comprising:
a zone (11) intended to receive a belt connecting the rim to a first power transmission element,
an inner periphery (12) equipped with a plurality of lugs (13,14, 15, 16), at least two lugs (13, 14), diametrically opposite, being arranged on the outer side of the pulley (100, 100') and at least two other lugs (15, 16), also diametrically opposite, being arranged on the inner side of the pulley (100, 100');
- a hub (2) intended to be secured to a second power transmission element; one of the power transmission elements being driving and the other being driven or vice versa;
- at least two rings (40, 400, 40'), each ring (40, 400, 40') comprising at least four abutments (41, 42, 43, 44; 41', 42', 43', 44') diametrically opposite two-by-two (42, 44; 41, 43; 42', 44'; 41', 43') capable of engaging with the lugs (13, 14, 15, 16) of the rim (1) and/or the lugs (32, 33, 32', 33') of the indexers (30, 30') so as to be able to be driven in rotation about said longitudinal axis (AX);
- an elastically deformable element (5) of which a first end (51) is mounted in contact with the first ring (40, 400) and of which a second end (52) is mounted in contact with the second ring (40');
**characterized in that** the pulley (100, 100') further comprises:
- at least two indexers (30, 30') mounted fixed with respect to the hub (2), the first indexer (30) being arranged on the outer side of the pulley (100) and equipped on its outer periphery (31) with at least two lugs (32, 33) diametrically opposite and the second indexer (30') being arranged on the inner side of the pulley (100, 100') and equipped on its outer periphery (31') with at least two lugs (32', 33') diametrically opposite;
- one of the rings (40, 400; 40') being mounted between the inner periphery (12) of the rim (1) and the outer periphery (31) of the first indexer (30) and the other (40') of the rings being mounted between the inner periphery (12) of the rim (1) and the outer periphery (31') of the second indexer (30'), said at least four abutments (41, 42, 43, 44; 41', 42', 43', 44') being thus adapted to cooperate with the lugs (32, 33, 32', 33') of the indexers (30, 30') so as to be able to be driven in rotation about said longitudinal axis (AX).

2. Pulley (100, 100') according to claim 1, wherein each ring (40, 400; 40') comprises a first portion (45, 45') comprising said lugs (13, 14; 15, 16) and a second portion (46, 46') extending axially under said zone (11) intended to receive a belt connecting the rim (1) to a first power transmission element, from the first portion (45, 45'), each second portion (46, 46') being presented in the form of at least one cylindrical skirt (460, 460', 461, 461') situated, radially, either between the elastically deformable element (5) and the rim (1) for the two portions (46, 46'), or between the elastically deformable element (5) and the hub (2) for the two portions (46, 46').

3. Pulley (100, 100') according to the preceding claim, wherein each second portion (46, 46') comprises a second cylindrical skirt, concentric with the first skirt, the elastically deformable element (5) thus being housed between said cylindrical skirts (460, 461, 460', 461').

4. Pulley (100, 100') according to one of the preceding claims, wherein at least one of the cylindrical skirts (460, 460', 461, 461') comprises at least one slot (F, F'), advantageously longitudinal.

5. Pulley (100, 100') according to one of the preceding claims, wherein the or each ring (40, 40', 400) is made of a material selected from among plastics such as polyamide (PA), polyester, polyoxymethylene (POM), polyetheretherketone (PEEK), phenylene polysulphide (PPS) or alloys thereof or elastomer thermoplastics (TPE).

6. Pulley (100') according to one of the preceding claims, wherein at least one first additional spring (R1) is provided on one (400) of the rings (400, 40'), mounted in parallel with the elastically deformable element (5).

7. Pulley (100') according to one of the preceding claims, wherein a second additional spring (R2) is provided, on said ring (400), also mounted in parallel with the elastically deformable element (5), the first and the second additional springs (R1, R2) presenting a same stiffness and being arranged, on said ring (400), diametrically opposite.

8. Pulley (100, 100') according to one of the preceding claims, wherein the elastically deformable element (5) is a torsion spring.

9. Pulley (100) according to one of the preceding claims, wherein a load support (R) is provided, for example a roller, arranged radially between one (30) of the indexers (30, 30') and the rim (1).
